# EUROPEAN PATENT APPLICATION

(11) **EP 2 692 787 A1**
(43) Date of publication of application: **05.02.2014**
(21) Application number: 12762880.8
(22) Date of filing: 13.03.2012
(51) Int. Cl.: C08L 1/00, C08J 3/20, C08J 5/00, C08K 9/06

(54) **FLAME-RETARDANT RESIN COMPOSITION, METHOD FOR PRODUCING SAME, AND MOLDED PRODUCT**

(30) Priority: 29.03.2011 JP 2011073115
(71) Applicant: FUJIFILM Corporation, Tokyo 106-8620 (JP)
(72) Inventor: KOIKE, Makoto, Ashigarakami-gun Kanagawa 258-8577 (JP); ICHIKAWA, Yasunori, Ashigarakami-gun Kanagawa 258-8577 (JP); MIYOSHI, Yoshiyuki, Ashigarakami-gun Kanagawa 258-8577 (JP)
(74) Representative: HOFFMANN EITLE
(86) International application number: PCT/JP2012/056355
(87) International publication number: WO 2012/132869

(57) **Abstract**

A flame retardant resin composition contains: a thermoplastic resin containing a cellulosic resin; and a flame retardant, wherein the flame retardant is composed of: first metal hydroxide particles having a particle size of 100 nm to 1000 nm and having particle surfaces modified with an epoxy silane coupling agent, at 40% by weight to 60% by weight of the whole flame retardant; and second metal hydroxide particles having a particle size of 10 nm to 50 nm and having particle surfaces modified with an amino silane coupling agent, at 60% by weight to 40% by weight of the whole flame retardant. This flame retardant resin composition containing a cellulosic resin is provided with excellent flame retardancy, mechanical properties, and moldability.

## Description

### {Technical Field}

The present invention relates to a flame retardant resin composition, a method for producing the composition, and a molded article of the composition, and particularly to a flame retardant resin composition containing a cellulosic resin, a method for producing the composition, and a molded article of the composition.

### {Background Art}

Conventionally, petroleum resins such as polyethylene resins, polypropylene resins, vinyl chloride, polyamide, polystyrene resins, and polyethylene terephthalate (PET) resins are widely used as melt molding raw materials including injection molding raw materials and extrusion molding raw materials.

Wastes of daily necessaries and industrial products made from petroleum resins are recycled in part, but most of the wastes are disposed of by incineration, landfill and the like. Accordingly, cellulosic resins attract attention as biomass resins to respond to global environmental problems (global warming and petroleum depletion, etc.).

Cellulosic resins are expected to be used for various applications, such as electrical and electronic equipment components and enclosure materials. When a resin composition containing a cellulosic resin is used for exterior materials for televisions and office automation equipment such as personal computers, flame retardancy, mechanical properties, and moldability are required of the resin composition containing a cellulosic resin.

Generally, as a method for imparting flame retardancy to a resin, which is a polymer material, a flame retardant is added to the polymer material. Typical flame retardants include halogen flame retardants, phosphorous flame retardants, and inorganic particle flame retardants. However, for halogen flame retardants, there are many problems on the environment, such as generation of halogen gas and black smoke at the time of burning, and generation of dioxin at the time of incineration. Also for phosphorous flame retardants, there are problems on the environment such as generation of phosphine gas, and there are further problems such as high prices and supply concern of phosphorus ores as the raw material.

In contrast, metal hydroxides representing inorganic particle flame retardants, for example, magnesium hydroxide particles are harmless and have few problems on the environment. Additionally, the magnesium hydroxide particles have characteristics such as low cost and abundant raw material resources, which can solve the respective problems of the halogen and phosphorous flame retardants.

Patent Literature 1 discloses magnesium hydroxide particles constituting a flame retardant, wherein, by inclusion of 100 to 1000 ppm of a transition metal compound into magnesium hydroxide, the magnesium hydroxide particles have high flame retardancy and emit a small amount of carbon monoxide and smoke.

Patent Literature 2 discloses a flame-retardant abrasion-resistant resin composition containing a propylene-ethylene block copolymer, an ethylene-vinyl acetate copolymer, and a metal hydroxide represented by magnesium hydroxide, and further including a silane coupling agent having an amino group.

Patent Literature 3 discloses a flame retardant thermoplastic resin composition composed of a thermoplastic resin, a halogen flame retardant, a flame retardant aid, a silicone, and magnesium hydroxide, wherein the magnesium hydroxide has a particle size of 0.2 µm to 6 µm.

Patent Literature 4 discloses a method for producing surface-coated flame retardant particles including a step of preparing a dispersion liquid of flame retardant particles composed of magnesium hydrate and having a particle size of 1 nm to 500 nm in an aqueous solution in which metal salts of organic compounds and a dispersant are dissolved, and a step of adding an acidic aqueous solution dropwise into the dispersion liquid to deposit the organic compounds on the surface of the flame retardant particles to thereby form a coating layer.

### {Citation List}

### {Patent Literature}

{PTL 1} Japanese Patent Application Laid-Open No. 2007-119508
{PTL 2} Japanese Patent Application Laid-Open No. 2000-086858
{PTL3} Japanese Patent Application Laid-Open No. 10-204298
{PTL 4} Japanese Patent Application Laid-Open No. 2006-232980

### {Summary of Invention}

### {Technical Problem}

As described above, when a cellulosic resin is used as a material for molded articles, flame retardancy, mechanical properties, and moldability are required of the cellulosic resin. However, if a great amount of magnesium hydroxide is added in order to impart flame retardancy, there exists a problem that the essential properties of the cellulosic resin are degraded.

Since the magnesium hydroxide particles of Patent Literature 1 have a particle size of 0.5 µm to 5 µm, the flame retardant effect is low. Moreover, flame retardancy, mechanical properties, and moldability required of resin compositions containing a cellulosic resin are not considered.

Patent Literature 2 does not disclose the particle size of the magnesium hydroxide. Moreover, flame retardancy, mechanical properties, and moldability required of resin compositions containing a cellulosic resin are not considered.

Since the magnesium hydroxide particles of Patent Literature 3 have a particle size of 0.2 µm to 6 µm, the flame retardant effect is low. The flame retardant thermoplastic resin of Patent Literature 3 includes a halogen flame retardant that has problems on the environment and safety.

Patent Literature 4 has no specifications on resins, and thus a high flame retardant effect cannot be expected. Moreover, rules on surface coating materials are not specific, and thus a high flame retardant effect cannot be promising.

The reason for this is as follows. That is, since a high flame retardant effect by a flame retardant is expressed by dispersion of the flame retardant without aggregation in a resin, compatibility and affinity between the surfaces of the particles and the resin become an important viewpoint. However, Patent Literature 4 has no rules on materials of either the resin or the surfaces of the particles and has no viewpoint of the compatibility and affinity between the surface of the particles and the resin. Thus a high flame retardant effect cannot be promising.

The present invention has been achieved in view of such circumstances, and aims to provide a flame retardant resin composition containing metal hydroxide particles and a cellulosic resin that is provided with excellent flame retardancy, mechanical properties, and moldability, a method for producing the composition, and a molded article of the composition.

### {Solution to Problem}

The present inventors have conducted extensive research on metal hydroxide particles to be blended as a flame retardant into a thermoplastic resin containing a cellulosic resin. As a result, the present inventors have found that a flame retardant resin composition that meets flame retardancy, mechanical properties, and moldability can be obtained by addition of a flame retardant composed of two types of metal hydroxide particles that have different particle sizes and have been subjected to different silane coupling treatments in a particular weight ratio into the thermoplastic resin containing the cellulosic resin, and thereby have achieved the present invention.

According to one aspect of the present invention, a flame retardant resin composition contains: a thermoplastic resin containing a cellulosic resin; and a flame retardant, wherein the flame retardant is composed of: first metal hydroxide particles having a particle size of 100 nm to 1000 nm and having particle surfaces modified with an epoxy silane coupling agent, at 40% by weight to 60% by weight of the whole flame retardant; and second metal hydroxide particles having a particle size of 10 nm to 50 nm and having particle surfaces modified with an amino silane coupling agent, at 60% by weight to 40% by weight of the whole flame retardant.

According to one aspect of the present invention, a flame retardant includes: first metal hydroxide particles having a particle size of 100 nm to 1000 nm and having particle surfaces modified with an epoxy silane coupling agent, at 40% by weight to 60% by weight of the whole flame retardant; and second metal hydroxide particles having a particle size of 10 nm to 50 nm and having particle surfaces modified with an amino silane coupling agent, at 60% by weight to 40% by weight of the whole flame retardant. As a result, the flame retardant resin composition containing a cellulosic resin is provided with excellent flame retardancy, mechanical properties, and moldability.

According to another aspect of the present invention, the flame retardant resin composition preferably contains the flame retardant in the range of 5% by weight to 30% by weight of the whole flame retardant resin composition.

According to another aspect of the present invention, the thermoplastic resin preferably contains the cellulosic resin 50% by weight or more of the total thermoplastic resin.

According to another aspect of the present invention, the first metal hydroxide and the second metal hydroxide are preferably any of aluminum hydroxide, magnesium hydroxide, and calcium hydroxide.

According to another aspect of the present invention, preferably, the first metal hydroxide particles are present in the range of 40% by weight to 60% by weight of the whole flame retardant and have a particle size of 100 nm to 500 nm, and the second metal hydroxide particles are present in the range of 60% by weight to 40% by weight of the whole flame retardant and have a particle size of 10 nm to 30nm.

According to another aspect of the present invention, a method for producing a flame retardant resin composition includes at least a step of melt-kneading a thermoplastic resin containing a cellulosic resin and a flame retardant, wherein the flame retardant is composed of: first metal hydroxide particles having a particle size of 100 nm to 1000 nm and having particle surfaces modified with an epoxy silane coupling agent, at 40% by weight to 60% by weight of the whole flame retardant; and second metal hydroxide particles having a particle size of 10 nm to 50 nm and having particle surfaces modified with an amino silane coupling agent, at 60% by weight to 40% by weight of the whole flame retardant.

According to another aspect of the present invention, a method for producing a flame retardant resin composition includes steps of: melt-kneading a thermoplastic resin containing a cellulosic resin, and a portion of a flame retardant; and adding all the rest of the flame retardant into the kneaded material, wherein the flame retardant is composed of: first metal hydroxide particles having a particle size of 100 nm to 1000 nm and having particle surfaces modified with an epoxy silane coupling agent, at 40% to 60% by weight of the whole flame retardant; and second metal hydroxide particles having a particle size of 10 nm to 50 nm and having particle surfaces modified with an amino silane coupling agent, at 60% to 40% by weight of the whole flame retardant.

According to another aspect of the present invention, the flame retardant resin composition preferably contains the flame retardant in the range of 5% by weight to 30% by weight of the whole flame retardant resin composition.

According to another aspect of the present invention, the first metal hydroxide and the second metal hydroxide are preferably any of aluminum hydroxide, magnesium hydroxide, and calcium hydroxide.

According to another aspect of the present invention, a molded article is made by melt-molding any of the aforementioned flame retardant resin composition.

Additionally, in the present invention, since surface modification of the second metal hydroxide particles having a particle size of 10 nm to 50 nm by using an amino silane coupling agent having lower bonding strength with the resin can suppress an increase in the viscosity of the flame retardant resin composition on melting of the flame retardant resin composition, a decrease in moldability of articles to be molded can be suppressed.

### {Advantageous Effects of Invention}

A flame retardant resin composition containing metal hydroxide particles and a cellulosic resin according to the present invention has excellent flame retardancy, mechanical properties, and moldability.

### {Description of Embodiments}

Hereinafter, preferable embodiments of the present invention will be described. The present invention is described through the following preferred embodiments, but can be modified by various methods without departing from the scope of the present invention to utilize embodiments other than the present embodiments. Therefore, all the modifications within the scope of the present invention are included in the scope of claims. Herein, he range of numerical values represented by using "to" inbetween means the range including the numerical values before and after "to".

This embodiment is a flame retardant resin composition containing a thermoplastic resin containing a cellulosic resin and a flame retardant, wherein 40% by weight to 60% by weight of the whole flame retardant is composed of first metal hydroxide particles having a particle size of 100 nm to 1000 nm and having particle surfaces modified with an epoxy silane coupling agent, and 60% by weight to 40% by weight of the whole flame retardant is composed of second metal hydroxide particles having a particle size of 10 nm to 50 nm and having particle surfaces modified with an amino silane coupling agent.

### <Thermoplastic Resin>

### (1) Cellulosic resin

A cellulosic resin is defined as a resin composed of a cellulose derivative in which hydroxy groups included in cellulose have been converted into other functional groups. Cellulosic resins such as diacetyl cellulose (DAC), triacetyl cellulose (TAC), cellulose acetate butyrate (CAB), and cellulose acetate propionate (CAP) can be preferably used.

### (2) Other Resins

In addition to the aforementioned cellulosic resins, petroleum resins such as polycarbonates, ABS resins, and polyolefins can be used. The reason these petroleum resins are used is to impart mechanical properties and moldability required depending on the intended use.

The cellulosic resin preferably accounts for 50% by weight or more of the total thermoplastic resin. Increasing the ratio of the cellulosic resin to the total thermoplastic resin enables the total thermoplastic resin to reduce environmental burdens.

### <Flame Retardant>

The flame retardant used in the present embodiments includes at least two types of metal hydroxide particles that have different particle sizes and have been subjected to different silane coupling treatments.

The first metal hydroxide particles have a particle size of 100 nm to 1000 nm, the surfaces of which are modified by an epoxy silane coupling agent. The second metal hydroxide particles have a particle size of 10 nm to 50 nm, the surfaces of which are modified by the amino silane coupling agent.

Then, first metal hydroxide particles preferably have a particle size of 100 nm to 500 nm, the surfaces of which are modified by the epoxy silane coupling agent. The second metal hydroxide particles have a particle size of 10 nm to 30 nm, the surfaces of which are modified by an amino silane coupling agent.

In this case, the particle size indicated herein is a volume average particle size measured with MICROTRAC UPA from Nikkiso Co., Ltd. (the dynamic light scattering method).

The silane coupling agent is represented by the general formula R-Si(OR')₃. R' is a methyl group, an ethyl group, or the like. The silane coupling agent is chemically bonded to the surface of the magnesium hydroxide particles by hydrolysis and dehydration condensation of (OR').

The epoxy silane coupling agent has an epoxy group as a functional group represented by R in the general formula. Epoxy silane coupling agents such as 3-glycidoxypropyltrimethoxysilane, 3-glycidoxypropylmethyldiethoxysilane, and 3-glycidoxypropyltriethoxysilane can be preferably used. The epoxy group and the cellulosic resin form chemical bonding.

The amino silane coupling agent has an amino group as a functional group represented by R in the general formula. Amino silane coupling agents such as 3-aminopropyltrimethoxysilane, 3-aminopropyltriethoxysilane, and N-2-aminoethyl-3-aminopropyltrimethoxysilane can be preferably used. The amino group and the cellulosic resin form chemical bonding.

The epoxy silane coupling agent has higher bonding strength with the cellulosic resin compared with the amino silane coupling agent.

In the present embodiment, the first metal hydroxide particles with a large particle size are surface-treated with the epoxy silane coupling agent, and the second metal hydroxide particles with a small particle size are surface-treated with the amino silane coupling agent.

The first metal hydroxide particles account for a range of 40% by weight to 60% by weight of the whole flame retardant, and the second metal hydroxide particles account for a range of 60% by weight to 40% by weight of the whole flame retardant.

This is for the purpose of balancing mechanical properties and moldability as well as improving the flame retardancy of the resin. Particles with a small particle size, in spite of their high flame retardant effect, are likely to aggregate in a resin. If the particles aggregate in the resin, the flame retardancy is not improved, and the strength is reduced. Thus, particles having a small particle size and particles with a large particle size are both used. For the particles having a large particle size, aggregation in the resin is prevented by surface treatment with the epoxy silane coupling agent capable of forming covalent bonding with the cellulosic resin.

In contrast, if the particles having a small particle size are also surface-treated with the epoxy silane coupling agent that forms covalent bonding with the cellulosic resin, the viscosity on melting is increased to thereby lower the moldability. In the present invention, since surface modification of the particles having a small particle size is performed with an amino silane coupling agent that forms no covalent bonding in spite of its affinity and that has lower bonding strength, it is possible to suppress an increase in the viscosity of the flame retardant resin composition on melting of the flame retardant resin composition. Therefore, deterioration of moldability of articles to be molded can be suppressed.

As a method for producing metal hydroxide particles, the following method can be adopted. For example, an aqueous solution of a metal salt is mixed with an aqueous solution of a hydroxide salt to deposit metal hydroxide particles. The metal hydroxide particles are crystallized by hydrothermal reaction, and then are surface-treated with a silane coupling agent.

When the metal hydroxide particles are deposited, the particles can be mixed and deposited using, for example, a micro device described in Japanese Patent No. 4339163.

In this context of the present invention, the metal hydroxide is preferably any of aluminum hydroxide, magnesium hydroxide, and calcium hydroxide. In this case, the metal hydroxide prevents burning of the resin because the metal hydroxide does not burn even if the resin bums, decomposes to absorb heat around the burning temperature of the resin, and decomposes to release water molecules with large heat capacity. The thermal decomposition temperatures and the amounts of heat absorbed of aluminum hydroxide, magnesium hydroxide, and calcium hydroxide are shown hereinbelow.

**{Table 1}**

| | Heat decomposition (start of dehydration) temperature (°C) | Amount of heat absorption (cal/g) |
|---|---|---|
| Aluminum hydroxide | 205 | 470 |
| Magnesium hydroxide | 340 | 180 |
| Calcium hydroxide | 450 | 222 |

The metal hydroxide particles prevent burning of the resin by not burning themselves even if the resin bums, by decomposing themselves to absorb heat around the burning temperature of the resin, and by decomposing themselves to release water molecules with large heat capacity.

An ideal thermal decomposition temperature of the flame retardant lies between the process temperature on resin molding and the decomposition temperature on resin burning. In this case, the temperature on resin molding is approximately 200 to 300°C, and the temperature on resin burning is 350 to 550°C. Accordingly, among metal hydroxide particles, magnesium hydroxide is ideal as a flame retardant although its Amount of heat absorption is slightly small.

In this case, the aforementioned flame retardant herein is preferably blended in the range of 5% by weight to 30% by weight of the whole flame retardant resin composition

In addition to the thermoplastic resin and the flame retardant aforementioned, various additives can also be added to the flame retardant resin composition of the present embodiments, as needed. For example, additives such as colorants, plasticizers, and antioxidants can be added.

### <Method for Producing a Flame Retardant Resin Composition>

The flame retardant resin composition can be produced by melt-kneading of the aforementioned thermoplastic resin containing the cellulosic resin and the flame retardant, for example, in a twin-screw kneading extruder. Additionally, the aforementioned thermoplastic resin containing the cellulosic resin can be melt-kneaded in the twin-screw kneading extruder, and subsequently, can be added with the aforementioned flame retardant. Furthermore, the aforementioned thermoplastic resin containing the cellulosic resin and the aforementioned flame retardant can be melt-kneaded in the twin-screw kneading extruder, and subsequently, can be further added with the aforementioned flame retardant.

### {Examples}

Hereinbelow, the present invention will be described more specifically according to the following Examples. Materials, usages, ratios, treatments, procedures, and the like shown in the following examples can be optionally modified without departing from the gist of the present invention. Therefore, the scope of the present invention is not limited to the following specific examples.

Table 2 shows the formulations of Examples 1 to 12 and Comparative Examples 1 to 10. Magnesium hydroxide particles A and magnesium hydroxide particles B were prepared according to the formulations in Table 2. KBM-403 (Shin-Etsu Chemical Co., Ltd.) as an epoxy silane coupling agent and KBE-903 (Shin-Etsu Chemical Co., Ltd.) as an amino silane coupling agent were used. KBE-1003 (Shin-Etsu Chemical Co., Ltd.) as a vinyl silane coupling agent was used. The epoxy silane coupling agent was added at 1% by weight of the magnesium hydroxide particles A, and the amino silane coupling agent was added at 1% by weight of the magnesium hydroxide particles B.

Pellets of cellulose acetate propionate (CAP) and polycarbonate (PC) as thermoplastic resins were prepared. The weight ratio of CAP to PC was 1:1.

According to Table 2, the magnesium hydroxide particles A, the magnesium hydroxide particles B, and the thermoplastic resin were kneaded using a kneading machine at 230°C for 5 minutes. Then, the kneaded mixture was injection molded at 230°C under 0.2 MPa to obtain test specimens for a flammability test and a mechanical test.

**{Table 2}**

| | Magnesium hydroxide particles A | | | Magnesium hydroxide particles B | | | Resin |
|---|---|---|---|---|---|---|---|
| | Average particle size (nm) | Silane coupling agent | Blending amount (g) | Average particle size (nm) | Silane coupling agent | Blending amount (g) | Blending amount (g) |
| Example 1 | 10 | Amino | 1 | 100 | Epoxy | 1.5 | 47.5 |
| Example 2 | 10 | Amino | 1.5 | 100 | Epoxy | 1 | 47.5 |
| Example 3 | 10 | Amino | 6 | 100 | Epoxy | 9 | 35 |
| Example 4 | 10 | Amino | 9 | 100 | Epoxy | 6 | 35 |
| Example 5 | 50 | Amino | 1 | 1000 | Epoxy | 1.5 | 47.5 |
| Example 6 | 50 | Amino | 1.5 | 1000 | Epoxy | 1 | 47.5 |
| Example 7 | 50 | Amino | 6 | 1000 | Epoxy | 9 | 35 |
| Example 8 | 50 | Amino | 9 | 1000 | Epoxy | 6 | 35 |
| Example 9 | 30 | Amino | 1 | 500 | Epoxy | 1.5 | 47.5 |
| Example 10 | 30 | Amino | 1.5 | 500 | Epoxy | 1 | 47.5 |
| Example 11 | 30 | Amino | 6 | 500 | Epoxy | 9 | 35 |
| Example 12 | 30 | Amino | 9 | 500 | Epoxy | 6 | 35 |
| Comparative Example 1 | 10 | Amino | 0.5 | 100 | Epoxy | 2 | 47.5 |
| Comparative Example 2 | 10 | Amino | 12 | 100 | Epoxy | 3 | 35 |
| Comparative Example 3 | 50 | Amino | 0.5 | 1000 | Epoxy | 2 | 47.5 |
| Comparative Example 4 | 50 | Amino | 12 | 1000 | Epoxy | 3 | 35 |
| Comparative Example 5 | 5 | Amino | 1.25 | 100 | Epoxy | 1.25 | 47.5 |
| Comparative Example 6 | 75 | Amino | 1.25 | 100 | Epoxy | 1.25 | 47.5 |
| Comparative Example 7 | 10 | Amino | 1.25 | 50 | Epoxy | 1.25 | 47.5 |
| Comparative Example 8 | 10 | Amino | 1.25 | 1500 | Epoxy | 1.25 | 47.5 |
| Comparative Example 9 | 10 | Amino | 1.25 | 100 | Vinyl | 1.25 | 47.5 |
| Comparative Example 10 | 10 | Vinyl | 1.25 | 100 | Epoxy | 1.25 | 47.5 |

Subsequently, the following tests were performed on the specimens thus made.

### (1) Flammability Test

The test was performed in accordance with UL94 V-0, V-1, and V-2 standard of the UL flammability test method.

### (2) Mechanical Test

The test was performed in accordance with the following Japanese Industrial Standards (JIS).
Flexural modulus: JIS K7171
Test machine: AUTOGRAPH AGS, by Shimadzu Corporation
Maximum flexural strength: JIS K7171
Test machine: AUTOGRAPH AGS, by Shimadzu Corporation
Charpy impact strength: JIS K7111
Test machine: IMPACT TESTER, by Toyo Seiki Seisaku-sho, Ltd.

### (3) Moldability

In preparing test specimens for the Charpy impact strength test, the test specimens were evaluated as to whether the mixtures were able to be molded into a shape of 80 mm in length, 10 mm in width, and 4 mm in thickness. Successfully molded specimens were described as Good (G) and unsuccessfully molded specimens were described as Bad (B) in Table 3.

Table 3 shows the results of the flammability test, the mechanical test, and the moldability for Examples 1 to 12 and Comparative Examples 1 to 10.

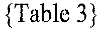

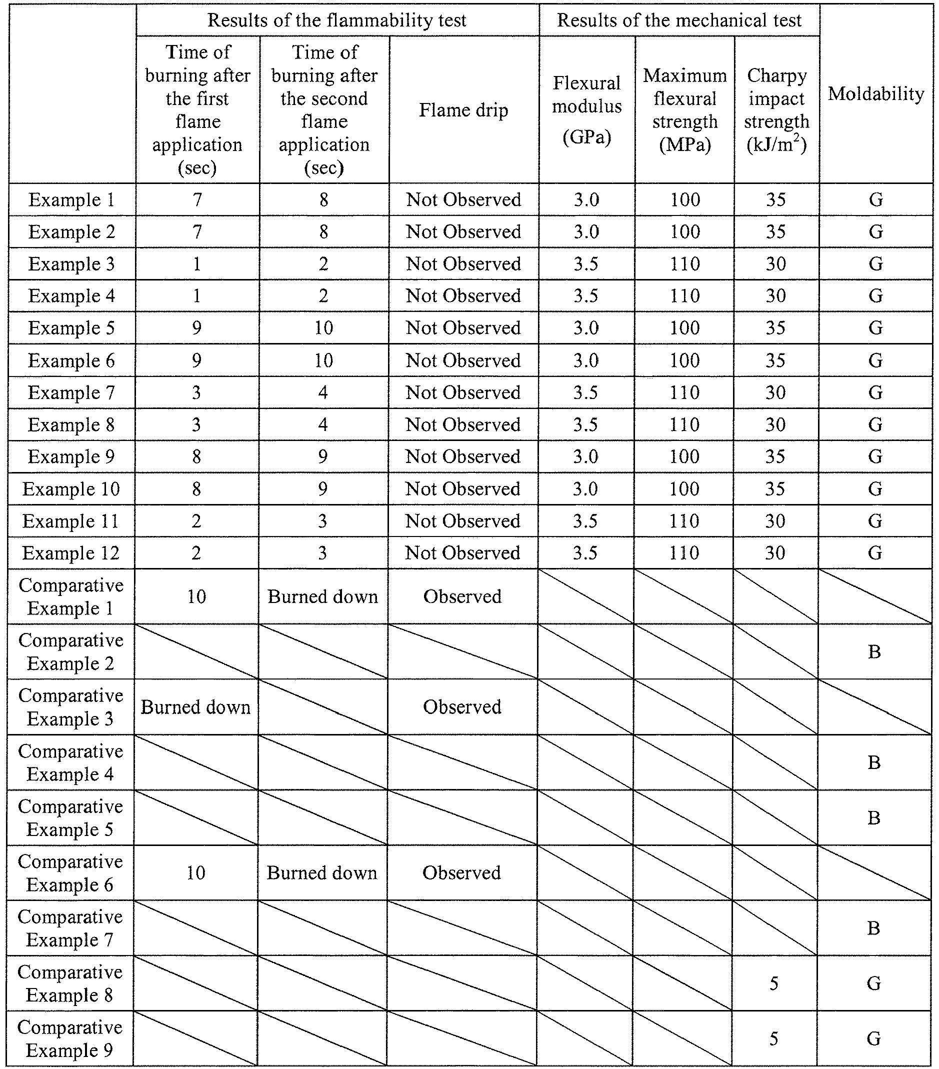

According to Table 3, the flame retardants in the flame retardant resin compositions of Examples 1 to 12 include: magnesium hydroxide particles A having a particle size of 100 nm to 1000 nm and having particle surfaces modified with an epoxy silane coupling agent, at 40% by weight to 60% by weight of the whole flame retardant; and magnesium hydroxide particles B having a particle size of 10 nm to 50 nm and having particle surfaces modified with an amino silane coupling agent, at 60% by weight to 40% by weight of the whole flame retardant. Consequently, good results were obtained in each of the flammability test, the mechanical test, and the moldability.

On the other hand, in Comparative Example 1, the amount of the magnesium hydroxide particles A having a small particle size was small. As a result, the flame retardant effect was low.

In Comparative Example 2, the amount of the magnesium hydroxide particles A having a small particle size was large. As a result, the flowability was low and the moldability was poor.

In Comparative Example 3, the amount of the magnesium hydroxide particles A having a small particle size was small. As a result, the flame retardant effect was low.

In Comparative Example 4, the amount of the magnesium hydroxide particles A having a small particle size was large. As a result, the flowability was low and the moldability was poor.

In Comparative Example 5, the magnesium hydroxide particles A had a particle size of 5 nm. As a result, the flowability was low and the moldability was poor.

In Comparative Example 6, the magnesium hydroxide particles A had a particle size of 75 nm. As a result, the flame retardant effect was low.

In Comparative Example 7, the magnesium hydroxide particles B had a particle size of 50 nm. As a result, the flowability was low and the moldability was poor.

In Comparative Example 8, the magnesium hydroxide particles B had a particle size of 1500 nm. As a result, the composition became fragile, and the Charpy impact strength was low.

In Comparative Example 9, the magnesium hydroxide particles B were surface-treated with the vinyl silane coupling agent. Accordingly, the particles aggregated due to lack of affinity with the thermoplastic resin. As a result, the composition became fragile, and the Charpy impact strength was low.

In Comparative Example 10, the magnesium hydroxide particles A were surface-treated with the vinyl silane coupling agent. Accordingly, the particles aggregated due to lack of affinity with the thermoplastic resin. As a result, the flame retardant effect was low.

## Claims

1. A flame retardant resin composition containing: a thermoplastic resin containing a cellulosic resin; and a flame retardant,
wherein the flame retardant is composed of:
first metal hydroxide particles having a particle size of 100 nm to 1000 nm and having particle surfaces modified with an epoxy silane coupling agent, at 40% by weight to 60% by weight of the whole flame retardant; and
second metal hydroxide particles having a particle size of 10 nm to 50 nm and having particle surfaces modified with an amino silane coupling agent, at 60% by weight to 40% by weight of the whole flame retardant.

2. The flame retardant resin composition according to claim 1, wherein the flame retardant resin composition contains the flame retardant in a range of 5% by weight to 30% by weight of the whole flame retardant resin composition.

3. The flame retardant resin composition according to claim 1 or 2, wherein the thermoplastic resin contains the cellulosic resin 50% by weight or more of the total thermoplastic resin.

4. The flame retardant resin composition according to any one of claims 1 to 3, wherein
the first metal hydroxide particles are present in the range of 40% by weight to 60% by weight of the whole flame retardant and have a particle size of 100 nm to 500 nm, and
the second metal hydroxide particles are present in the range of 60% by weight to 40% by weight of the whole flame retardant and have a particle size of 10 nm to 30nm.

5. The flame retardant resin composition according to any one of claims 1 to 4, wherein the first metal hydroxide and the second metal hydroxide are any of aluminum hydroxide, magnesium hydroxide, and calcium hydroxide.

6. A method for producing a flame retardant resin composition comprising at least a step of melt-kneading a thermoplastic resin containing a cellulosic resin, and a flame retardant,
wherein the flame retardant is composed of:
first metal hydroxide particles having a particle size of 100 nm to 1000 nm and having particle surfaces modified with an epoxy silane coupling agent, at 40% by weight to 60% by weight of the whole flame retardant, and
second metal hydroxide particles having a particle size of 10 nm to 50 nm and having particle surfaces modified with an amino silane coupling agent, at 60% by weight to 40% by weight of the whole flame retardant.

7. A method for producing a flame retardant resin composition comprising steps of:
melt-kneading a thermoplastic resin containing a cellulosic resin, and a portion of a flame retardant; and
adding all the rest of the flame retardant into the kneaded material,
wherein the flame retardant is composed of:
first metal hydroxide particles having a particle size of 100 nm to 1000 nm and having particle surfaces modified with an epoxy silane coupling agent, at 40 to 60% by weight of the whole flame retardant, and
second metal hydroxide particles having a particle size of 10 nm to 50 nm and having particle surfaces modified with an amino silane coupling agent, at 60 to 40% by weight of the whole flame retardant.

8. The method for producing a flame retardant resin composition according to claim 6 or 7, wherein the flame retardant resin composition contains the flame retardant in a range of 5% by weight to 30% by weight of the whole flame retardant resin composition.

9. The method for producing a flame retardant resin composition according to any one of claims 6 to 8, wherein the first metal hydroxide and the second metal hydroxide are any of aluminum hydroxide, magnesium hydroxide, and calcium hydroxide.

10. A molded article molded by melt-molding of the flame retardant resin composition according to any one of claims 1 to 5.
